# EUROPÄISCHE PATENTANMELDUNG

(11) **EP 4 821 651 A1**
(43) Veröffentlichungstag der Anmeldung: **14.10.2026**
(21) Anmeldenummer: 26165526.0
(22) Anmeldetag: 17.03.2026
(51) Int. Cl.: B28D 7/02, B23Q 11/00, B23B 47/34, B23B 51/04, B28D 1/04

(54) **WASSERMANAGEMENTSYSTEM**

(30) Priorität: 01.04.2025 EP 25167803
(71) Anmelder: Hilti Aktiengesellschaft, 9494 Schaan (LI)
(72) Erfinder: Specht, Helmut, 87660 Irsee (DE); Lorenz, Philipp, 80798 München (DE); Kunz, Bernhard, 9494 Schaan (LI); Vida, Gabor, 7000 Chur (CH); Golubovic, Goran, 86807 Buchloe (DE); Santeiu, Claudiu Radu, 9470 Buchs (CH)
(74) Vertreter: Hilti Aktiengesellschaft Corporate Intellectual Property

(57) **Zusammenfassung**

Die vorliegende Erfindung betrifft ein Wassermanagementsystem zum Bereitstellen von Kühlwasser und Aufbereiten von Bohrschlamm, der bei Betrieb eines Kernbohrgeräts entsteht, wobei das Wassermanagementsystem folgendes aufweist: eine Auffangvorrichtung (400) zum Auffangen von Bohrschlamm oder Staub, der bei Betrieb eines Kernbohrgeräts entsteht, wobei die Auffangvorrichtung einen Absaugkörper (402) mit einer Bohröffnung (404), welche sich durch den Absaugkörper (402) erstreckt und dazu ausgebildet ist eine Bohrkrone aufzunehmen, aufweist; eine Aufbereitungsvorrichtung (300) zum Aufbereiten von Bohrschlamm, wobei die Aufbereitungsvorrichtung (300) derart strömungstechnisch mit der Auffangvorrichtung (400) verbindbar ist, dass Bohrschlamm oder Staub, welcher von der Auffangvorrichtung (400) aufgefangen wird, an die Aufbereitungsvorrichtung (300) förderbar ist; und eine Vakuumpumpe (200), welche mit der Auffangrichtung strömungstechnisch verbindbar ist, wobei das Wassermanagementsystem derart ausgebildet ist, dass die Vakuumpumpe (200) wahlweise, in einer ersten Anordnung, an der Auffangvorrichtung (400) oder, in einer zweiten Anordnung, an der Aufbereitungsvorrichtung (300) lösbar befestigt werden kann

## Beschreibung

Die vorliegende Erfindung betrifft eine Wassermanagementsystem zum Bereitstellen von Kühlwasser und Aufbereiten von Bohrschlamm, insbesondere aber nicht ausschließlich während des Betriebs eines Kernbohrsystems. Weitere Aspekte der vorliegenden Erfindung betreffen eine Vakuumpumpe und eine Aufbereitungsvorrichtung.

### Hintergrund der Erfindung

Im Bereich der Kernbohrgeräte sind verschiedene Vorrichtungen bekannt, um Bohrschlamm aufzufangen, der bei der Durchführung einer Kernbohrung entsteht. Beispielsweise sind Wasserfangringe bekannt, die mit mechanischen Befestigungsmitteln, wie Klemmen oder Spannmitteln, an dem Untergrund befestigt werden können. Andere Vorrichtungen werden mit Hilfe eines Unterdrucks, der von einem Sauggerät erzeugt wird, an einem Untergrund befestigt. Die mechanischen Befestigungsmittel sind allerdings mit dem Nachteil verbunden, dass sie häufig nicht zerstörungsfrei aus dem Untergrund herausgelöst werden können, so dass kleinere Beschädigungen am Untergrund nicht ausgeschlossen werden können.

Bei der Befestigung der Wasserfangringe mit Unterdruck besteht das Problem, dass der Wasserfangring nur dann an dem Untergrund befestigt und dort gehalten werden kann, wenn eine Sauganlage einer Wasseraufbereitungsvorrichtung eingeschaltet und in Betrieb ist. Allerdings ist ein Dauerbetrieb der Sauganlage zur Durchführung der Kernbohrung nicht erforderlich und Sauggeräte verbrauchen gerade im Leerlauf besonders viel elektrische Energie. Dieser Nachteil wiegt umso schwerer, wenn akkubetriebene Sauggeräte zum Einsatz kommen, die aufgrund ihrer Versorgung mit elektrischer Energie durch Batterien oder dergleichen nur über eine limitierte Menge an Bord-Energie verfügen. Aber auch wenn netzbetriebene Wasseraufbereitungsvorrichtungen verwendet werden, führt die Befestigung von konventionellen Wasserfangringen mittels eines Sauggeräts zu einem unnötig hohen Energieverbrauch. Außerdem kann ein Dauerbetrieb der Wasseraufbereitungsvorrichtung zu einer erhöhten Lärmbelastung auf einer Baustelle führen.

Darüber hinaus stellt es einen weiteren Nachteil dar, wenn der Wasserfangring nur bei laufendem Betrieb eines Sauggeräts an dem Untergrund befestigt werden kann, dass der Bohrort bzw. die Baustelle nicht für die Durchführung der Kernbohrung vorbereitet werden kann. Dies wäre aber wünschenswert für einen effizienten Ablauf von Arbeiten auf einer Baustelle. Bei Verwendung eines Sauggeräts mit automatischer Falschluftabreinigung eines Filters besteht die Gefahr, dass sich der Wasserfangring wegen der möglicherweise reduzierten Saugleistung des Sauggeräts während der Filterabreingung von der Wand oder dem Untergrund löst.

Um diese Nachteile zu überwinden, wird im Stand der Technik vorgeschlagen, die Absaugung von Bohrschlamm und den zur Befestigung der Auffangvorrichtung benötigten Unterdruck räumlich, d.h. strömungstechnisch, zu trennen. Bei derartigen Lösungen ist eine Vakuumpumpe notwendig, welche Unterdruck erzeugt, um die Auffangvorrichtung am Untergrund zu befestigen. Dies bedeutet jedoch ein weiteres Hilfsgerät, zusätzlich zur Aufbereitungsvorrichtung, welches durch den Benutzer mitgeführt und kalibriert werden muss. Auch wird hierdurch der Platzbedarf auf der Baustelle erhöht. Schließlich ist es notwendig, dass die Vakuumpumpe in unmittelbarer Nähe zur Auffangvorrichtung platziert wird, um eine stabile Saugverbindung herstellen zu können. Dies ist jedoch besonders an schwer zugänglichen Stellen von Nachteil.

Auf Grundlage der oben genannten Problemstellung ist es eine Aufgabe der vorliegenden Erfindung, eine Wassermanagementsystem anzugeben, bei dem auf einfache und flexible Weise ein Vakuum zum Befestigen einer Auffangvorrichtung am Untergrund erzeugt werden kann. Dabei soll insbesondere auch der Transportaufwand für die Benutzung des Wassermanagementsystem reduziert werden.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

Demgemäß betrifft die vorliegende Erfindung ein Wassermanagementsystem zum Bereitstellen von Kühlwasser und Aufbereiten von Bohrschlamm, der bei Betrieb eines Kernbohrgeräts entsteht, wobei das Wassermanagementsystem folgendes aufweist:
- eine Auffangvorrichtung zum Auffangen von Bohrschlamm oder Staub, der bei Betrieb eines Kernbohrgeräts entsteht, wobei die Auffangvorrichtung einen Absaugkörper mit einer Bohröffnung, welche sich durch den Absaugkörper erstreckt und dazu ausgebildet ist eine Bohrkrone aufzunehmen, aufweist;
- eine Aufbereitungsvorrichtung zum Aufbereiten von Bohrschlamm, wobei die Aufbereitungsvorrichtung derart strömungstechnisch mit der Auffangvorrichtung verbindbar ist, dass Bohrschlamm oder Staub, welcher von der Auffangvorrichtung aufgefangen wird, an die Aufbereitungsvorrichtung förderbar ist; und
- eine Vakuumpumpe, welche mit der Auffangrichtung strömungstechnisch verbindbar ist, wobei das Wassermanagementsystem derart ausgebildet ist, dass die Vakuumpumpe wahlweise, in einer ersten Anordnung, an der Auffangvorrichtung oder, in einer zweiten Anordnung, an der Aufbereitungsvorrichtung lösbar befestigt werden kann.

Das Wassermanagementsystem der vorliegenden Erfindung hat den Vorteil, dass die Vakuumpumpe zu jeder Zeit während der Benutzung des Systems sicher und platzsparend angeordnet ist. So kann die Vakuumpumpe gemäß der vorliegenden Erfindung während des Transports des Wassermanagementsystems an der Aufbereitungsvorrichtung lösbar befestigt sein. Der Nutzer kann somit die Vakuumpumpe zusammen mit der Aufbereitungsvorrichtung transportieren und lagern. Am Einsatzort kann die Vakuumpumpe von der Aufbereitungsvorrichtung entfernt und an der Auffangvorrichtung angebracht werden. Somit sind die Ansaugwege der Vakuumpumpe besonders gering, da diese direkt an der Auffangvorrichtung montiert wird. Durch die Anbringung der Vakuumpumpe an der Auffangvorrichtung während der Benutzung, ist es besonders einfach die Vakuumpumpe zu bedienen. So kann der Nutzer mit wenigen Handgriffen die Auffangvorrichtung an der zu bearbeitenden Oberfläche anbringen und, gleichzeitig, die Vakuumpumpe aktivieren (bspw. durch einen entsprechenden Schalter an der Vakuumpumpe). Sobald die Vakuumpumpe aktiviert wird, wird Luft aus einem Vakuumraum der Auffangvorrichtung gesaugt, um die Auffangvorrichtung an der zu bearbeitenden Oberfläche zu befestigen.

Es ist grundsätzlich auch denkbar, die Vakuumpumpe auch in ihrer zweiten Anordnung an der Aufbereitungsvorrichtung zu verwenden. Beispielsweise kann die Vakuumpumpe in dieser zweiten Anordnung über einen Saugschlauch mit der Auffangvorrichtung strömungstechnisch verbunden werden. Dies ist insbesondere dann von Vorteil, wenn eine Anordnung der Vakuumpumpe an der Auffangvorrichtung ungünstig erscheint. Beispielsweise kann dies der Fall sein, wenn die Auffangvorrichtung an engen Stellen, wie beispielsweise Wandeckbereichen angebracht werden soll. In derartigen Anwendungssituationen kann häufig kein Platz für die zusätzliche Befestigung der Vakuumpumpe an der Auffangvorrichtung bestehen. **In** diesem Fall kann das System der vorliegenden Erfindung in der zweiten Anordnung der Vakuumpumpe an der Aufbereitungsvorrichtung verwendet werden. Die Vakuumpumpe wird dann über einen Saugschlauch mit der Auffangvorrichtung verbunden, um Luft aus den Vakuumräumen der Auffangvorrichtung zu saugen.

Nach einer weiteren Ausführungsform ist die Vakuumpumpe in der ersten Anordnung und in der zweiten Anordnung strömungstechnisch mit der Auffangvorrichtung verbindbar. Dementsprechend ist der Benutzer frei in seiner Wahl, wie die Luft aus der Vakuumkammer der Auffangvorrichtung gesaugt werden soll. Einerseits kann die Vakuumpumpe direkt mit der Auffangvorrichtung verbunden werden. Andererseits kann die Vakuumpumpe, in ihrer zweiten Anordnung, über einen Saugschlauch mit der Auffangvorrichtung verbunden werden. Der Nutzer kann die Anordnung der Vakuumpumpe individuell bestimmen, beispielsweise auf Grundlage von Platzverhältnissen oder zur Vereinfachung des Handlings.

Nach einer weiteren Ausführungsform weist die Vakuumpumpe einen ersten Sauganschluss auf, welcher in der ersten Anordnung der Vakuumpumpe strömungstechnisch mit der Auffangvorrichtung verbunden ist, und wobei die Vakuumpumpe einen zweiten Sauganschluss aufweist, welcher in der zweiten Anordnung der Vakuumpumpe strömungstechnisch mit der Auffangvorrichtung verbunden ist. Durch die Verwendung von zwei Sauganschlüssen kann einerseits gewährleistet werden, dass, in der ersten Anordnung der Vakuumpumpe, eine sichere, strömungstechnische Verbindung zwischen dem Sauganschluss und dem Vakuumraum der Auffangvorrichtung besteht. Andererseits kann der zweite Sauganschluss derart ausgebildet sein, dass dieser in beiden Anordnungen der Vakuumpumpe, d. h. an der Auffangvorrichtung oder an der Aufbereitungsvorrichtung, frei zugänglich ist. Somit kann am zweiten Sauganschluss jederzeit ein entsprechender Saugschlauch angeschlossen werden, um die Vakuumpumpe mit einer Auffangvorrichtung zu verbinden. Durch die beiden Sauganschlüsse ist es insbesondere auch denkbar, dass die Vakuumpumpe, in ihrer ersten Anordnung an der Auffangvorrichtung, mit zwei oder mehr Auffangvorrichtungen gleichzeitig verbunden werden kann.

Nach einer weiteren Ausführungsform weist die Vakuumpumpe ein erstes Ventil auf, welches zwischen einer geschlossenen und einer geöffneten Stellung überführbar ist, und wobei das erste Ventil derart ausgebildet ist, dass das erste Ventil, bei Befestigung der Vakuumpumpe an der Auffangvorrichtung, vom geschlossenen Zustand in den geöffneten Zustand überführt wird.

Nach einer weiteren Ausführungsform ist der zweite Sauganschluss als Saugstutzen ausgebildet, wobei der zweite Sauganschluss über einen Saugschlauch mit einem Sauganschluss der Auffangvorrichtung verbindbar ist.

Nach einer weiteren Ausführungsform weist die Vakuumpumpe ein zweites Ventil auf, welches zwischen einer geschlossenen und einer geöffneten Stellung überführbar ist, und wobei das zweite Ventil derart ausgebildet ist, dass das zweite Ventil, bei Befestigung eines Saugschlauchs am zweiten Sauganschluss, vom geschlossenen Zustand in den geöffneten Zustand überführt wird. Durch die Ventile an den Sauganschlüssen wird gewährleistet, dass die Vakuumpumpe nur dann über einen Sauganschluss Luft ansaugt, wenn der Anschluss sicher mit der Auffangvorrichtung verbunden ist. Es wird somit verhindert, dass Fremdluft durch einen der beiden Sauganschlüsse angesaugt wird, wenn dieser nicht mit der Auffangvorrichtung verbunden ist.

Nach einer weiteren Ausführungsform weist die Vakuumpumpe ein Batterieterminal zur lösbaren Befestigung einer Batterie auf. Durch die kabellose Ausbildung der Vakuumpumpe ist diese unabhängig von der Aufbereitungsvorrichtung bzw. der Auffangvorrichtung betreibbar. Die Vakuumpumpe kann insbesondere mit einer vergleichsweise kleinen Batterie (bspw. kleine Kapazität) versorgt werden, da das Aufrechterhalten des Vakuums innerhalb der Vakuumräume der Auffangvorrichtung nur eine gelegentliche Aktivität der Vakuumpumpe erfordert. Gleichzeitig wird durch das Versehen der Vakuumpumpe mit einer separaten Batterie gewährleistet, dass diese in beiden Anordnungen direkt verwendbar ist und nicht mit einer weiteren Energie Versorgungseinrichtung verbunden werden muss. Schließlich ist es gemäß dieser Ausführungsform nicht notwendig, die Vakuumpumpe mit externen Stromversorgungen, wie z.B. die Batterie der Aufbereitungsvorrichtung, zu verbinden. Dies ist insbesondere dann von Vorteil, wenn die Aufbereitungsvorrichtung selbst Batterie betrieben ist. Hierdurch werden die Standzeiten der Aufbereitungsvorrichtung erhöht. Alternativ ist es jedoch auch denkbar, die Vakuumpumpe derart auszubilden, dass diese über eine Schnittstelle verfügt, die einen Betrieb der Vakuumpumpe durch die Energieversorgung der Aufbereitungsvorrichtung ermöglicht.

Nach einer weiteren Ausführungsform ist das Batterieterminal derart ausgebildet, dass eine Batterie in der ersten und der zweiten Anordnung lösbar am Batterieterminal befestigbar ist. Durch diese Ausführungsvarianten kann die Batterie auch während des Einsatzes in jeder Anordnung der Vakuumpumpe gewechselt werden. Es ist insbesondere nicht notwendig, die Vakuumpumpe aus ihrer ersten bzw. zweiten Anordnung zu entfernen, um eine Batterie mit dem Batterieterminal zu verbinden.

Nach einer weiteren Ausführungsform weist die Aufbereitungsvorrichtung ein Anschlussterminal auf, welches dazu ausgebildet ist, die Vakuumpumpe, in der zweiten Anordnung, elektrisch mit der Aufbereitungsvorrichtung zu verbinden. Das Anschlussterminal der Aufbereitungsvorrichtung kann dabei einerseits zum Datenübertrag zwischen der Aufbereitungsvorrichtung und der Vakuumpumpe dienen. Es ist somit denkbar, dass die Vakuumpumpe über eine Steuereinheit der Aufbereitungsvorrichtung gesteuert wird, wenn diese in ihrer zweiten Anordnung an der Aufbereitungsvorrichtung angeordnet ist. Auch kann die Datenübertragung dazu verwendet werden, Nutzung bzw. Statusdaten der Vakuumpumpe an die Aufbereitungsvorrichtung zu übertragen. Die Aufbereitungsvorrichtung kann beispielsweise über eine interne Steuereinheit dazu ausgebildet sein, diese Daten auszuwerten oder die Daten weiterzuleiten, beispielsweise an einen Cloud-Server zur Überwachung der Vakuumpumpe. Alternativ oder zusätzlich kann das Anschlussterminal zur Stromübertragung zwischen der Aufbereitungsvorrichtung und der Vakuumpumpe vorgesehen sein. Gemäß dieser Ausführungsvarianten kann, in der zweiten Anordnung der Vakuumpumpe, auf einen Anschluss einer Batterie an der Vakuumpumpe verzichtet werden. Vielmehr wird die Vakuumpumpe dementsprechend, in der zweiten Anordnung, durch die Stromversorgung der Aufbereitungsvorrichtung mit elektrischer Energie versorgt.

Nach einem weiteren Aspekt betrifft die vorliegende Erfindung eine Vakuumpumpe zum Erzeugen eines Unterdrucks für Auffangvorrichtungen zum Auffangen von Bohrschlamm oder Staub, der bei Betrieb eines Kernbohrgeräts anfällt, wobei die Vakuumpumpe Befestigungsmittel aufweist, welche dazu ausgebildet sind die Vakuumpumpe wahlweise, in einer ersten Anordnung, an einer Auffangvorrichtung oder, in einer zweiten Anordnung, an einer Aufbereitungsvorrichtung lösbar zu befestigen.

Nach einer weiteren Ausführungsform weist die Vakuumpumpe einen ersten Sauganschluss auf, welcher, in der ersten Anordnung der Vakuumpumpe, strömungstechnisch mit einer Auffangvorrichtung verbindbar ist.

Nach einer weiteren Ausführungsform weist die Vakuumpumpe einen zweiten Sauganschluss auf, welcher derart als Saugstutzen ausgebildet ist, dass ein Saugschlauch strömungstechnisch mit dem zweiten Sauganschluss verbindbar ist.

Nach einer weiteren Ausführungsform ist der erste Sauganschluss an einer ersten Außenoberfläche der Vakuumpumpe angeordnet, wobei der zweite Sauganschluss an einer zweiten Außenoberfläche der Vakuumpumpe angeordnet ist, wobei die erste Außenoberfläche vorzugsweise im Wesentlichen senkrecht zur zweiten Außenoberfläche ist.

Nach einer weiteren Ausführungsform weist die Vakuumpumpe folgendes auf:
- ein erstes Ventil, welches zwischen einer geschlossenen Stellung, in welcher der erste Sauganschluss verschlossen ist, und einer geöffneten Stellung, in welcher der erste Sauganschluss geöffnet ist, überführbar ist;
- ein zweites Ventil, welches zwischen einer geschlossenen Stellung, in welcher der zweite Sauganschluss verschlossen ist, und einer geöffneten Stellung, in welcher der zweite Sauganschluss geöffnet ist, überführbar ist.

Ein weiterer Aspekt der vorliegenden Erfindung betrifft eine Aufbereitungsvorrichtung zum Aufbereiten von Bohrschlamm, der bei Betrieb eines Kernbohrgeräts entsteht, wobei die Aufbereitungsvorrichtung eine Schnittstelle zum lösbaren Befestigen einer Vakuumpumpe aufweist.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Kernbohrsystems mit Auffangvorrichtung;
- Fig. 2: perspektive Ansicht von vorne und von hinten auf eine Vakuumpumpe gemäß einer Ausführungsform der vorliegenden Erfindung;
- Fig. 3A: Querschnitt durch die Vakuumpumpe gemäß Fig. 2, entlang eines ersten Sauganschlusses;
- Fig. 3B: Querschnitt durch die Vakuumpumpe gemäß Fig. 2, entlang eines ersten Sauganschlusses;
- Fig. 4: perspektive Ansicht einer Aufbereitungsvorrichtung mit einer Vakuumpumpe gemäß Fig. 2;
- Fig. 5: Ansichten einer Auffangvorrichtung zum Anschluss einer Vakuumpumpe gemäß Fig. 2 über den ersten Sauganschluss;
- Fig. 6: perspektivische Ansicht einer Auffangvorrichtung zum Anschluss einer Vakuumpumpe gemäß Fig. 2 über den zweiten Sauganschluss.

### Detaillierte Beschreibung

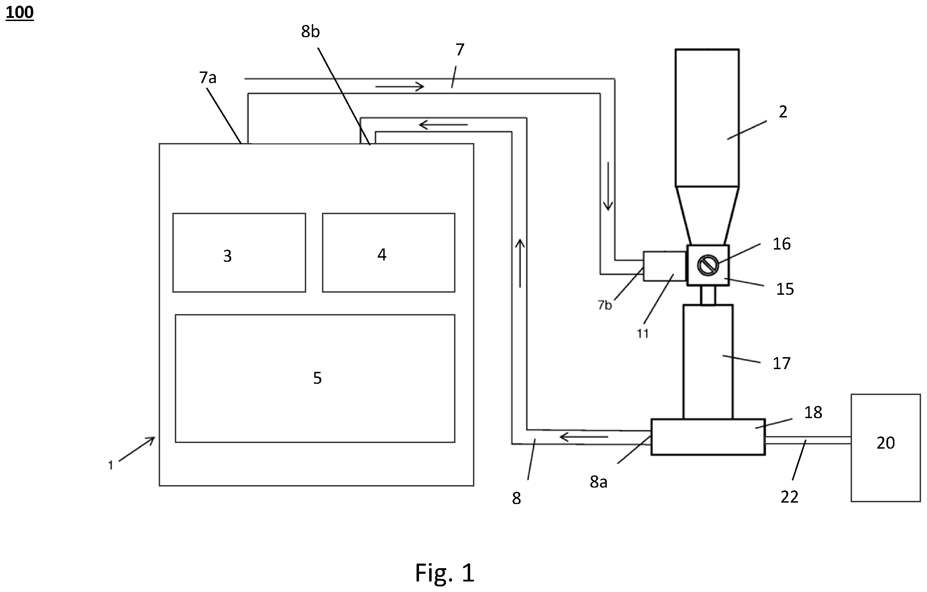

Fig. 1 zeigt ein Kernbohrsystem 100. Das Kernbohrsystem 100 weist eine als Wasseraufbereitungsanlage ausgestaltete Aufbereitungsvorrichtung 1 auf, welche mit einer als Kernbohrmaschine ausgestalteten Werkzeugmaschine 2 verbunden ist. Die Kernbohrmaschine 2 ist mit einem als Bohrkrone ausgestalteten Werkzeug 17 verbunden. Die als Wasseraufbereitungsanlage ausgestaltete Aufbereitungsvorrichtung 1 ist dazu ausgebildet Kühlwasser am Werkzeug bereitzustellen und verbrauchtes Kühlwasser/Bohrschlamm abzusaugen und zu reinigen.

Die Aufbereitungsvorrichtung 1 enthält im Wesentlichen ein Gehäuse, einen Wasserspeicher 5, einen Bohrschlammspeicher, einen Filter 4, eine erste Leitung 7, eine zweite Leitung 8, eine Pumpeneinrichtung 3 und eine Steuerungseinrichtung.

Das Gehäuse ist im Wesentlichen als Hohlkörper ausgestaltet. Darüber hinaus enthält das Gehäuse an einer Außenseite eine Schnittstelle zur Versorgung mit elektrischer Spannung, bspw. eine Batterieaufnahme. In dem Gehäuse ist sowohl der Wasserspeicher 5 als auch der Bohrschlammspeicher positioniert. Der Wasserspeicher 4 dient dazu einen Vorrat an Frischwasser zum Kühlen und Spülen aufzubewahren.

Der Bohrschlammspeicher ist im Wesentlichen in Form eines zylindrischen Behälters ausgestaltet. Die Seitenwände sowie der Boden sind als Filter 4 ausgebildet und bestehen daher aus einem filterartigen Material, welches dazu geeignet ist, den Bohrschlamm zurückzuhalten und lediglich Wasser durchdringen zu lassen. Der Bohrschlammspeicher und der Wasserspeicher 5 sind insbesondere so zueinander positioniert, dass das Wasser, welches aus dem Filter 4 des Bohrschlammspeichers austritt, in dem Wasserspeicher 5 aufgefangen wird.

Die erste Leitung 7 (Zuleitung) ist in Form eines flexiblen Schlauchs ausgestaltet und enthält ein erstes Ende 7a sowie ein zweites Ende 7b. Das erste Ende 7a der ersten Leitung 7 ist mit dem Wasserspeicher 5 verbunden. Das zweite Ende 7b der ersten Leitung 7 ist mit einem Verbindungsstück 15 an der Kernbohrmaschine 2 verbunden. Das Verbindungsstück 15 enthält ein Ventil 16, mit dem der Durchfluss durch die erste Leitung 7 geöffnet und geschlossen werden kann. Die geöffnete Stellung des Ventils 16 dient dazu, dass Wasser durch die erste Leitung 7 zu dem als Bohrkrone ausgestalteten Werkzeug 17 gelangen kann. Die geschlossene Stellung des Ventils 16 dient dazu, dass kein Wasser durch die erste Leitung 7 zu der Bohrkrone 17 gelangen kann.

Die erste Leitung 7 dient zum Transport von Frischwasser/gefiltertem Wasser aus dem Wasserspeicher 4 zu der Bohrkrone 17. Wie in Fig. 1 gezeigt, ist die erste Leitung 7 so über das Verbindungsstück 15 mit der Kernbohrmaschine 2 verbunden, dass das Wasser in das Innere der Bohrkrone 17 gelangt. Das Wasser kühlt und spült die Bohrkrone 17 während eines Bohrvorgangs. Entsprechend einer alternativen Ausgestaltung kann auch vorgesehen sein, dass die erste Leitung 7 zuerst zur Kühlung durch die Kernbohrmaschine 2 geführt wird, bevor es schließlich zum Kühlen und Spülen in die Bohrkrone 17 gelangt.

Die zweite Leitung 8 (Rückfuhrleitung) ist ebenfalls in Form eines flexiblen Schlauchs ausgestaltet und enthält ein erstes Ende 8a und ein zweites Ende 8b. Das erste Ende 8a der zweiten Leitung 8 ist mit einer Auffangvorrichtung 18 verbunden. Die Auffangvorrichtung 18 ist an dem Ende der Bohrkrone 17 positioniert und dient dazu den beim Bohrvorgang anfallenden Bohrschlamm (Gesteine, Staub und Wasser) aufzufangen. Das zweite Ende 8b der zweiten Leitung 8 ist so mit dem Bohrschlammspeicher verbunden, dass der Bohrschlamm über die zweite Leitung 8 von der Auffangvorrichtung 18 in den Bohrschlammspeicher gelangen kann.

Die Pumpeneinrichtung 3 enthält einen ersten Pumpenabschnitt und einen zweiten Pumpenabschnitt. Der erste Pumpenabschnitt ist mit der ersten Leitung 7 verbunden und dient dazu, Frischwasser aus dem Wasserspeicher 4 zu der Bohrkrone 17 zu fördern bzw. zu pumpen. Der zweite Pumpenabschnitt ist mit der zweiten Leitung 8 verbunden und dient dazu, Bohrschlamm aus der Auffangvorrichtung 18 in den Bohrschlammspeicher zu fördern bzw. zu pumpen.

Die Auffangvorrichtung 18 kann einerseits am Boden angeordnet werden. **In** diesem Fall ist es nicht notwendig, die Auffangvorrichtung am Untergrund zu befestigen. Bei Wand bzw. Deckenbohrungen ist es jedoch notwendig, die Auffangvorrichtung 18 an der zu bearbeitenden Oberfläche zu befestigen. Vorzugsweise ist die Auffangvorrichtung derart ausgebildet, dass diese durch einen Unterdruck an der zu bearbeitenden Oberfläche befestigt werden kann. Mit andere Worten, die Auffangvorrichtung 18 kann sich an der Oberfläche festsaugen. Hierzu weist die Auffangvorrichtung 18 einen nicht im Detail dargestellten Ansaugkörper auf, welcher dazu ausgebildet ist, einen Vakuumraum zusammen mit der Oberfläche, insbesondere Wand- oder Deckenoberfläche, auszubilden. Eine Vakuumpumpe 20 kann entweder direkt oder über einen Vakuumschlauch 22 mit einem Ansaugkörper der Auffangvorrichtung 18 verbunden werden, um den Vakuumraum mit Unterdruck zu beaufschlagen.

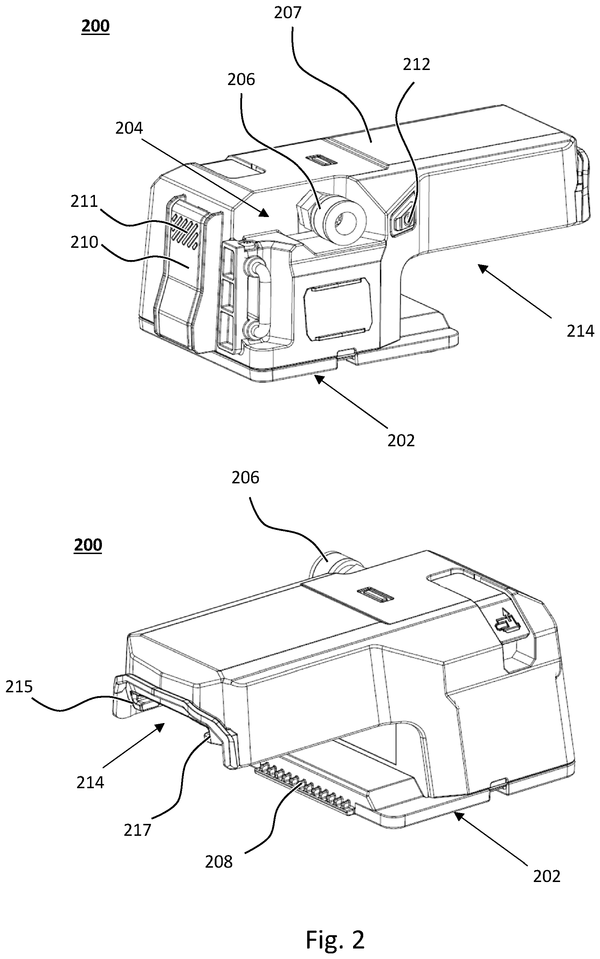

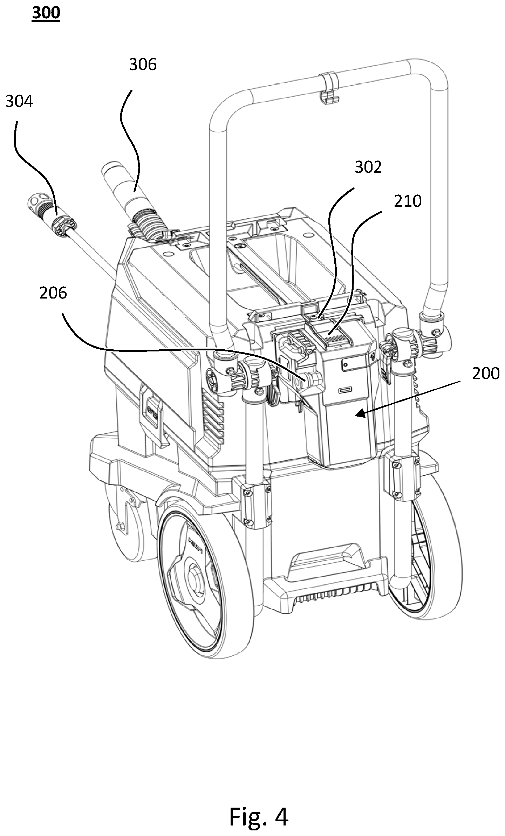

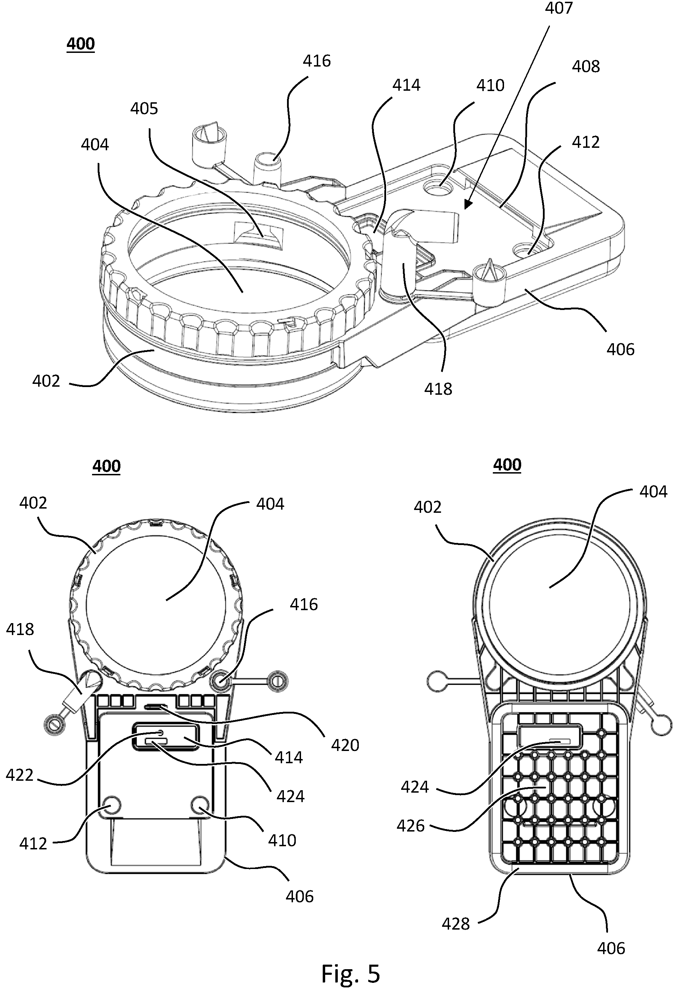

Die Figur 2 zeigt perspektivische Ansichten von vorne und hinten auf eine Vakuumpumpe gemäß einer Ausführungsform der vorliegenden Erfindung. Die Vakuumpumpe 200 gemäß Figur 2 kann in einer ersten Anordnung an einer Auffangvorrichtung (beispielsweise Figur 5) angebracht werden. In einer zweiten Anordnung kann die Vakuumpumpe 200 auch an einer Aufbereitungsvorrichtung (beispielsweise Figur 4) angeordnet werden.

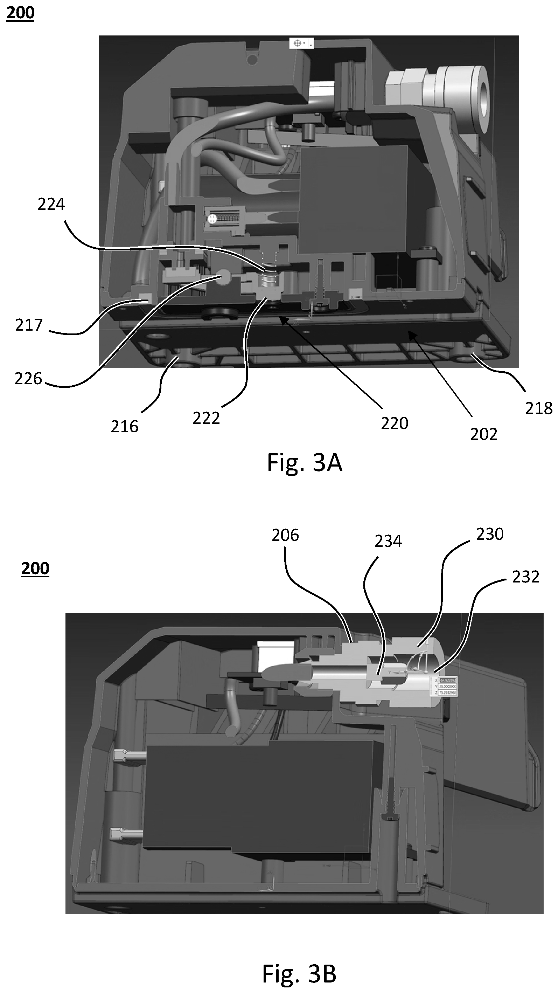

Die Vakuumpumpe 200 ist derart ausgebildet, dass sich die Saugfunktion der Vakuumpumpe 200, je nach Anordnung ändert. In der Ausführungsform gemäß Figur 2 weist die Vakuumpumpe hierzu zwei Sauganschlüsse auf. Ein erster, nicht dargestellter Sauganschluss ist an einer ersten Außenoberfläche 202 (Unterseite) der Vakuumpumpe 200 angeordnet. Ein zweiter Sauganschluss 206 ist an einer zweiten Außenoberfläche 204 (Seitenfläche) der Vakuumpumpe 200 angeordnet. Die beiden Sauganschlüsse erstrecken sich in dieser Ausführungsform also etwa senkrecht zueinander. In anderen Ausführungsbeispielen kann der zweite Sauganschluss auch auf einer der ersten Außenoberfläche 202 (Unterseite) gegenüberliegenden Außenoberfläche 207 (Oberseite) angeordnet sein. Wie dies im Hinblick auf die Figuren 3A und 3B näher erläutert werden wird, können beide Sauganschlüsse ein Ventil aufweisen.

Die Vakuumpumpe 200 weist Befestigungsmittel 208, 210 auf, um die Vakuumpumpe 200 lösbar an einer Auffangvorrichtung oder einer Aufbereitungsvorrichtung zu befestigen. Ein erstes Befestigungsmittel 208 ist an einem unteren Ende der Vakuumpumpe 200 angeordnet. Mit anderen Worten, das erste Befestigungsmittel 208 ist an der ersten Außenoberfläche 202 angeordnet. Bei dem ersten Befestigungsmittel 208 kann es sich um einen Fortsatz handeln, welcher in eine entsprechende Gegenstruktur der Auffangvorrichtung und/oder der Aufbereitungsvorrichtung eingeschoben werden kann.

Ein zweites Befestigungsmittel 210 ist gemäß Figur 2 als Schnapphaken ausgebildet. Das als Haken ausgebildete, zweite Befestigungsmittel 210 kann beim Befestigen der Vakuumpumpe 200 an der Auffangvorrichtung bzw. der Aufbereitungsvorrichtung in eine entsprechende Gegenstruktur eingeschnappt werden. Zum Lösen der Vakuumpumpe 200 von der Auffangvorrichtung bzw. der Aufbereitungsvorrichtung kann der Nutzer einen Taster 211 verwenden, um den Schnapphaken aus der entsprechenden Gegenkultur, beispielsweise aus einem Bügel, zu lösen.

Die Vakuumpumpe 200 dient insbesondere der Befestigung von Auffangvorrichtungen an einer zu bearbeitenden Oberfläche. Dementsprechend wird die Vakuumpumpe 200 insbesondere dafür verwendet, einen Vakuumraum, der mit der Vakuumpumpe 200 verbundenen Auffangvorrichtung mit Unterdruck zu beaufschlagen. Dies ist jedoch nur dann notwendig, wenn die Auffangvorrichtung im Einsatz ist. Entsprechend weist die Vakuumpumpe 200 einen Schalter 212 auf, mit welchem der Betrieb der Pumpe 200 ein und ausgeschaltet werden kann.

Auch während der Verwendung der Auffangvorrichtung ist es nicht notwendig, die Vakuumpumpe 200 durchgehend zu betreiben. Folglich kann die Vakuumpumpe 200 eine Steuervorrichtung aufweisen bzw. mit einer Steuervorrichtung der Auffangvorrichtung verbunden sein, welche die Aktivität der Vakuumpumpe kontrolliert. Beispielsweise kann der Betrieb der Vakuumpumpe 200 basierend auf dem im Vakuumraum der Auffangvorrichtung bestehenden Unterdruck gesteuert werden. So kann die Vakuumpumpe aktiviert werden, sobald der Unterdruck einen festgelegten Grenzwert überschreitet. Dies ist insbesondere dann hilfreich, wenn die Vakuumpumpe 200 batteriebetrieben ist.

Die in Figur 2 dargestellte Ausführungsform der Vakuumpumpe 200 ist eine kabellose Vakuumpumpe, d. h. die Vakuumpumpe 200 ist batteriebetrieben. Dementsprechend weist die Vakuumpumpe 200, ein Batterieterminal 214 zu lösbaren Befestigung einer Batterie an der Vakuumpumpe 200 auf. Das Batterieterminal 214 ist derart angeordnet, dass die Batterie ein- und ausgesteckt werden kann, während die Vakuumpumpe 200 über ihre erste Außenoberfläche 202 mit einer Auffangvorrichtung bzw. einer Aufbereitungsvorrichtung verbunden ist. Hierzu weist das Batterieterminal Längsführungen 215, 217 auf, welche sich parallel zur ersten Außenoberfläche 202 (Unterseite) der Vakuumpumpe 200 erstrecken.

Die Figur 3A zeigt eine Schnittdarstellung der Vakuumpumpe 200 gemäß Figur 2 entlang des ersten Sauganschlusses 220. Wie oben bereits erwähnt, ist der erste Sauganschluss 220 an der ersten Außenoberfläche 202 (Unterseite) der Vakuumpumpe 200 angeordnet. Der erste Sauganschluss 220 weist ein erstes Ventil 222 auf. Das erste Ventil 222 ist über eine Rückstellfeder 224 in seine in Figur 3A dargestellte, geschlossene Position vorgespannt. Dementsprechend ist der erste Sauganschluss 220 in seinem geschlossenen Zustand, solange die Vakuumpumpe 200 nicht mit einer Auffangvorrichtung bzw. Aufbereitungsvorrichtung verbunden ist. Wie dies im Hinblick auf die Figuren 4 und 5 näher erläutert werden wird, ist es bei der Vakuumpumpe 200 gemäß Figur 3A vorgesehen, dass das erste Ventil 222 ausschließlich dann aktiviert, d. h. geöffnet, wird, wenn die Vakuumpumpe 200 über ihre erste Außenoberfläche 202 mit einer Auffangvorrichtung verbunden wird. Ferner soll gemäß dieser Ausführungsform das erste Ventil 222 in seiner geschlossenen Stellung verbleiben, wenn die Vakuumpumpe 200 mit einer Aufbereitungsvorrichtung verbunden wird.

Beim Verbinden der Vakuumpumpe 200 mit einer entsprechenden Auffangvorrichtung kann eine Gegenstruktur (zum Beispiel Stift) der Auffangvorrichtung den Ventilkörper des ersten Ventils 222 entgegen der Rückstellkraft der Rückstellfeder 224 bewegen, insbesondere in das Innere der Vakuumpumpe 200 hinein. In der in Figur 3A dargestellten Ausführungsform kann sich der Ventilkörper des ersten Ventils 222 insbesondere um eine Schwenkachse 226 in den Hohlraum der Vakuumpumpe 200 hinein bewegen. Durch diese Bewegung wird das erste Ventil von seiner in Figur 3A gezeigten, geschlossenen Stellung in eine nicht dargestellte, geöffnete Stellung überführt. Es folgt, dass in der geöffneten Stellung des ersten Ventils 222 Luft über den ersten Sauganschluss, d. h. an der ersten Außenoberfläche 202 (Unterseite), angesaugt wird.

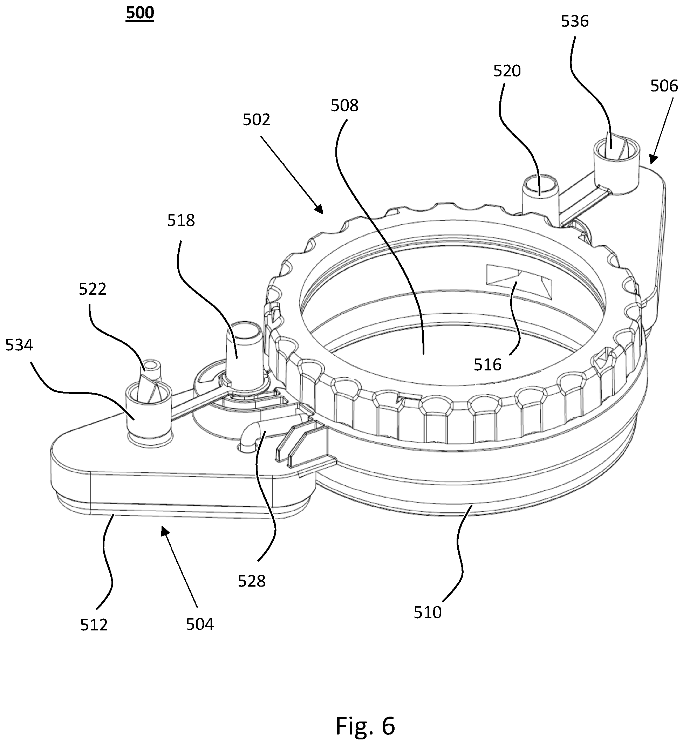

Die Figur 3B zeigt eine Schnittdarstellung der Vakuumpumpe 200 gemäß Figur 2 durch den zweiten Sauganschluss 206. Der zweite Sauganschluss 206 ist als Saugstutzen 230 ausgebildet. Dieser weist eine Schlauchaufnahmeöffnung 232 auf. Die Schlauchaufnahmeöffnung 232 ist derart ausgebildet, dass ein Saugschlauch (nicht dargestellt) in die Schlauchaufnahmeöffnung 232 eingeführt werden kann. Der Saugschlauch dient insbesondere dazu, die Vakuumpumpe 200 mit einem entsprechenden Saugstutzen einer Auffangvorrichtung zu verbinden, wie dies im Hinblick auf Figur 6 näher erläutert werden wird.

Der zweite Sauganschluss weist ein zweites Ventil 234 auf, welches zwischen einer geschlossenen und einer geöffneten Stellung überführbar ist. Auch das zweite Ventil 234 ist in seine geschlossene Stellung vorgespannt. Durch die Befestigung eines Saugschlauchs am zweiten Sauganschluss 206 wird das zweite Ventil 234 vom geschlossenen Zustand in einen nicht dargestellten, geöffneten Zustand überführt. Im geschlossenen Zustand kann keine Luft über den zweiten Sauganschluss angesaugt werden. Lediglich nach Anschluss des Saugschlauchs kann über den zweiten Sauganschluss 206 Luft angesaugt werden. Es sei an dieser Stelle erwähnt, dass die Vakuumpumpe 200 derart ausgebildet ist, dass Luft entweder über lediglich einen der beiden Sauganschlüsse oder über beide Sauganschlüsse gleichzeitig angesaugt werden kann.

Die Figur 4 zeigt eine Ausführungsform einer Aufbereitungsvorrichtung gemäß der vorliegenden Erfindung. Die Aufbereitungsvorrichtung 300 dient zum Aufbereiten von Bohrschlamm. Dementsprechend ist die Aufbereitungsvorrichtung 300 strömungstechnisch mit der Auffangvorrichtung verbindbar, insbesondere derart, dass Bohrschlamm oder Staub, welcher von der Auffangvorrichtung aufgefangen wird, an die Aufbereitungsvorrichtung 300 förderbar ist. In Figur 4 ist eine Kühlwasserzuleitung 304 schematisch dargestellt. Die Zuleitung 304 entspricht im Wesentlichen der in Figur 1 besprochenen Leitung 7 und dient dazu, Kühlwasser von der Aufbereitungsvorrichtung 300 an die Bohrkrone des Kernbohrgeräts zu fördern.

Um verbrauchtes Kühlwasser, d. h. Bohrschlamm, von der Auffangvorrichtung an die Aufbereitungsvorrichtung 300 zu fördern, weist die Aufbereitungsvorrichtung 300 eine Rückführleitung 306 auf. Die Rückführleitung 306 entspricht im Wesentlichen der in Figur 1 erwähnten Leitung 8. Die Rückführleitung 306 ist mit einer in Figur 4 nicht der dargestellten Pumpe verbunden, welche dazu dient, den Bohrschlamm aus der Auffangvorrichtung abzusaugen und diesen in den Filter (nicht dargestellt) der Aufbereitungsvorrichtung 300 zu saugen.

Die Aufbereitungsvorrichtung 300 weist einen Befestigungsbereich an der Außenseite des Gehäuses auf. Der Befestigungsbereich dient dazu, die Vakuumpumpe 200 an der Aufbereitungsvorrichtung 300 zu befestigen. In Figur 4 ist ein erstes Befestigungsmittel 302 schematisch dargestellt, welches mit dem als Schnapphaken ausgebildeten zweiten Befestigungsmittel 210 der Vakuumpumpe zusammenwirkt, um die Vakuumpumpe 200 stabil und lösbar an der Aufbereitungsvorrichtung 300 zu befestigen. Die Aufbereitungsvorrichtung 300 kann auch eine nicht dargestellte Gegenstruktur für die in Figur 2 dargestellten ersten Befestigungsmittel der Vakuumpumpe 200 aufweisen.

Gemäß einer bevorzugten Ausführungsform ist die Vakuumpumpe 200 derart an der Aufbereitungsvorrichtung 300 angebracht, dass der in Figur 3A angezeigte, erste Sauganschluss 220 nicht aktiv ist, d.h. dass das erste Ventil 222 in seiner geschlossenen Stellung verbleibt. Mit anderen Worten, die Auffangvorrichtung 300 weist im Befestigungsbereich keine Gegenstruktur (beispielsweise Stift) auf, die den Ventilkörper des ersten Ventils 222 in die geöffnete Stellung überführen könnte.

Der Befestigungsbereich der Aufbereitungsvorrichtung 300 ist derart angeordnet, dass der zweite Sauganschluss 206 der Vakuumpumpe 200 frei zugänglich ist, wenn die Vakuumpumpe 200 am Befestigungsbereich befestigt ist, wie dies in Figur 4 dargestellt ist. Es folgt, dass in der in Figur 4 gezeigten, zweiten Anordnung der Vakuumpumpe 200, d. h. in der Anordnung der Vakuumpumpe 200 an der Aufbereitungsvorrichtung 300, lediglich der zweite Sauganschluss 206 verwendbar ist. Wie im Hinblick auf Figur 3B bereits erwähnt wurde, weist der zweite Sauganschluss 206 ein zweites Ventil 234 auf, welches in seine geschlossene Stellung vorgespannt ist. Ein Betrieb der Vakuumpumpe 200 in seiner zweiten Anordnung gemäß Figur 4 ist dementsprechend nur dann möglich, wenn ein Saugschlauch in den Saugschlauch Anschluss 232 des zweiten Sauganschlusses 206 eingesteckt wird, um das zweite Ventil 234 zu öffnen.

In der in Figur 2 dargestellten zweiten Anordnung der Vakuumpumpe 200 an der Aufbereitungsvorrichtung 300 kann die Vakuumpumpe 200 über einen Saugschlauch mit einer Auffangvorrichtung verbunden werden. Eine beispielhafte Ausführungsform einer derartigen Auffangvorrichtung ist in Figur 6 dargestellt. Die Vakuumpumpe 200 ist demnach in ihrer zweiten Anordnung gemäß Figur 3B etreibt war. Die Vakuumpumpe, 200, muss also nicht von der Aufbereitungsvorrichtung 300 entfernt werden, um eine Auffangvorrichtung mit Unterdruck zu beaufschlagen.

Die in Figur 3 gezeigte Anordnung der Vakuumpumpe 200 an der Aufbereitungsvorrichtung 300, hat den Vorteil, dass die Vakuumpumpe 200 direkt zusammen mit der Aufbereitungsvorrichtung 300 transportiert werden kann. Auch wird durch die Anordnung der Vakuumpumpe 200 an der Aufbereitungsvorrichtung 300 Platz an der Baustelle eingespart.

In einer Ausführungsform der vorliegenden Erfindung ist die Vakuumpumpe in beiden Anordnungen (erste Anordnung weiter unten beschrieben) batteriebetrieben. Mit anderen Worten, in beiden Anordnungen weist die Vakuumpumpe 200, eine eigene Energieversorgung auf. Insbesondere handelt sich dabei um eine Batterie, welche mit dem Batterieterminal 214 lösbar verbunden werden kann. Die Vakuumpumpe ist somit nicht auf eine externe Energieversorgung angewiesen. Da zum Ansaugen der Auffangvorrichtung an den entsprechenden Untergrund nur wenig Pumpleistung erforderlich ist, kann die Vakuumpumpe 200 darüber hinaus mit einer vergleichsweise kleinen Batterie ausgestattet werden. Dies ist insbesondere im Gegensatz zur notwendigen Leistung der Aufbereitungsvorrichtung 300, welche einen wesentlich höheren Energiebedarf hat.

Gemäß einer alternativen, nicht dargestellten Ausführungsvariante, kann die Vakuumpumpe 200 auch derart ausgestaltet sein, dass diese in ihrer zweiten Anordnung an der Aufbereitungsvorrichtung 300 Energie über die Aufbereitungsvorrichtung 300 bezieht. Gemäß dieser Ausführungsform weist der Befestigungsbereich der Aufbereitungsvorrichtung ein Anschlussterminal auf, in welches die Vakuumpumpe 200 automatisch eingesteckt wird, beim Befestigen der Vakuumpumpe 200 an der Aufbereitungsvorrichtung 300. Beispielsweise kann das erste Befestigungsmittel 208 als Terminal ausgebildet sein, um eine leitende Verbindung zwischen der Aufbereitungsvorrichtung 300 und der Vakuumpumpe 200 zu ermöglichen. Gemäß dieser Ausführungsform kann die Vakuumpumpe 200 in der zweiten Anordnung über die Batterie der Aufbereitungsvorrichtung 300 betrieben werden

Figur 4 zeigt eine perspektivische Ansicht, eine Draufsicht und eine Ansicht von unten auf eine Auffangvorrichtung gemäß einer Ausführungsform der vorliegenden Erfindung. Die Auffangvorrichtung 400 weist einen Absaugkörper 402 auf. Der Absaugkörper 402 ist ringförmig ausgebildet. Er weist eine Bohröffnung 404 auf, welche sich durch den Absaugkörper 402 erstreckt und dazu ausgebildet ist, eine Bohrkrone aufzunehmen. Der Absaugkörper 402 ist derart ausgebildet, dass sich beim Einbringen der Bohrkrone in die Bohröffnung 404 ein Hohlraum um die Bohrkrone erstreckt, in welchem der Bohrschlamm aufgefangen werden kann. Der Absaugkörper 402 weist ferner einen oder mehrere Absaugöffnungen 405 auf. In der in Figur 5 dargestellten Ausführungsform der Auffangvorrichtung 400 weist der Absaugkörper 402 insbesondere zwei Absaugöffnungen 405 auf, von denen lediglich eine erste Absaugöffnung 405 dargestellt ist. Die Absaugöffnungen des Absaugkörpers 402 sind mit Absaugstutzen, 416, 418 verbunden. Die Absaugstutzen 416, 418 dienen insbesondere dem Anschluss der Rückführleitung 306 der Aufbereitungsvorrichtung 300 gemäß Figur 4.

Die Auffangvorrichtung 400 weist ferner einen Ansaugkörper 406 auf. Der Ansaugkörper 406 ist lösbar oder fest mit dem Absaugkörper 402 verbunden. In der Ausführungsform gemäß Figur 5 ist der Ansaugkörper 406 fest mit dem Absaugkörper 402 verbunden. Der Ansaugkörper 406 dient dazu, die Auffangvorrichtung 400 mittels Unterdruck an der zu bearbeitenden Oberfläche zu befestigen. Gemäß der vorliegenden Erfindung weist der Ansaugkörper 406 einen Befestigungsbereich 407 auf. Der Befestigungsbereich 407 dient dazu, die Vakuumpumpe 200 lösbar an der Auffangvorrichtung 400 zu befestigen. Der Befestigungsbereich 407 weist eine erste Gegenstruktur 408 auf, welche als Hinterschnitt ausgebildet ist. Die erste Gegenstruktur 408 dient dazu das erste Befestigungsmittel 208 der Vakuumpumpe 200 aufzunehmen. Der Befestigungsbereich 407 weist ferner Vertiefungen 410, 412 auf, welche mit den Vorsprüngen 216, 218 (Fig. 3A) an der Unterseite der Vakuumpumpe 200 zusammenwirken.

Schließlich weist der Ansaugkörper 406 einen Saugbereich 414 auf, welcher mit dem ersten Sauganschluss 220 der Vakuumpumpe 200 verbindbar ist. Insbesondere kann der Saugbereich 414 derart ausgestaltet sein, dass dieser über eine Dichtung 217 der Vakuumpumpe abgedichtet wird, wenn die Vakuumpumpe 200 an der Auffangvorrichtung 400 befestigt ist. Der Saugbereich 414 weist eine Saugöffnung 424 auf. Die Saugöffnung 424 erstreckt sich durch den Ansaugkörper 406 in den Hohlraum 426 auf der Unterseite des Ansaugkörpers 406, wie dies in Figur 5 dargestellt ist. Der Hohlraum 426 ist ein Vakuumraum der Auffangvorrichtung 400. Der Vakuumraum 426 wird durch die Dichtung 428 gegenüber der zu bearbeitenden Oberfläche abgedichtet.

Die Auffangvorrichtung 400 weist eine zweite Gegenstruktur 420 auf, welche beispielsweise als Bügel ausgestaltet sein kann. Die zweite Gegenstruktur 420 dient dazu, mit dem zweiten Befestigungsmittel 210 der Vakuumpumpe zusammen zu wirken. Insbesondere kann das als Schnapphaken ausgebildete zweite Befestigungsmittel 210 der Vakuumpumpe in die als Bügel ausgebildete zweite Gegenstruktur 420 eingreifen. Mit anderen Worten wird die Vakuumpumpe zur Befestigung an der Auffangvorrichtung 400 zunächst mit ihrem ersten Befestigungsmittel 208 in den Hinterschnitt 408 eingeschoben und danach über den Schnapphaken am Bügel eingeschnappt. Zum Lösen der Vakuumpumpe 200 von der Auffangvorrichtung 400 wird zunächst der Schnapphaken gelöst und die Vakuumpumpe 200 aus den Vertiefungen 410, 412 und dem Hinterschnitt 408 heraus geschwenkt.

Der Ansaugkörper 406 der Auffangvorrichtung 402 weist ferner eine als Stift ausgebildete Gegenstruktur 422 auf. Die als Stift ausgebildete Gegenstruktur 422 dient dazu, das zweite Ventil 222 von seiner geschlossenen Stellung in seine geöffnete Stellung zu überführen, wenn die Vakuumpumpe 200 an der Auffangvorrichtung 400 angeschlossen wird. Dementsprechend dient die Vakuumpumpe 200 in ihrer ersten Anordnung an der Auffangvorrichtung 400 dazu, den Vakuumraum 426 über die erste Saugöffnung mit Unterdruck zu beaufschlagen. In der hier dargestellten Ausführungsform wird der erste Sauganschluss der Vakuumpumpe automatisch der Saugöffnung 424 des Ansaugköpers 406 strömungstechnisch verbunden, wenn die Vakuumpumpe 200 am Befestigungsbereich 407 der Auffangvorrichtung 400 angebracht wird.

In der ersten Anordnung der Vakuumpumpe 200 an der Auffangvorrichtung 400 ist zunächst lediglich der erste Sauganschluss 220 geöffnet. Der zweite Sauganschluss 206 bleibt so lange geschlossen, bis ein Saugschlauch eingesteckt wird. Wie dies unten näher beschrieben werden wird, ist es durchaus vorstellbar, dass die Vakuumpumpe 200, insbesondere in der ersten Anordnung, gleichzeitig mit zwei oder mehr Auffangvorrichtungen strömungstechnisch verbunden ist.

Die Figur 6 zeigt eine perspektivische Ansicht von oben auf eine weitere Ausführungsform einer Auffangvorrichtung 500 gemäß der vorliegenden Erfindung. Die Auffangvorrichtung 500 weist einen Absaugkörper 502 auf. In der hier dargestellten Ausführungsform ist der Absaugkörper insbesondere ringförmig ausgebildet. Eine Bohröffnung 508 erstreckt sich durch den Absaugkörper 502. Die Bohröffnung 508 ist dazu ausgebildet, eine Bohrkrone eines Kernbohrgeräts aufzunehmen. Dementsprechend ist der Durchmesser der Bohröffnung 508 auf den Durchmesser der Bohrkrone angepasst. Mit anderen Worten, die Auffangvorrichtung kann Absaugkörper mit unterschiedlich großen Bohröffnungen aufweisen, welche jeweils auf die zu verwendende Bohrkrone zugeschnitten ist.

In der hier dargestellten Ausführungsform weist die Auffangvorrichtung 500 zwei Ansaugkörper 504, 506 auf. Die beiden Ansaugkörper 504, 506, sind mit dem Absaugkörper 502 verbunden. Insbesondere sind die beiden Ansaugkörper 504, 506 fest mit dem Absaugkörper 502 verbunden. Die Ansaugkörper 504, 506 können nicht relativ zum Absaugkörper 502 bewegt werden.

Gemäß der Ausführungsform in Figur 6 weisen die Ansaugkörper 504, 506 eine im Wesentlichen identische Form auf. Insbesondere handelt es sich hierbei um eine Dreiecksform.

Der Absaugkörper 502 weist eine erste Dichtung 510 auf. Die erste Dichtung 510 des Absaugkörpers 502 ist auf einer Unterseite des Absaugkörpers 502 angeordnet. Sie dient dazu, eine dichtende Verbindung mit der zu bearbeitenden Oberfläche (zum Beispiel Wand- oder Deckenoberfläche) herzustellen. Zusammen mit der zu bearbeitenden Oberfläche bildet der Absaugkörper 502 einen Hohlraum aus, welcher sich um die Bohröffnung 508 erstreckt. Der Hohlraum wird durch die erste Dichtung 510 gegenüber der zu bearbeitenden Oberfläche abgedichtet, um ein Herauslaufen des Kühlwassers bzw. Bohrschlamms aus dem Inneren des Absaugkörpers 502 zu verhindern.

Der erste Ansaugkörper 504 weist eine zweite Dichtung 512 auf. Die zweite Dichtung 512 dient dazu, einen im Inneren des ersten Ansaugkörpers 504 ausgebildeten Hohlraum gegenüber der zu bearbeitenden Oberfläche abzudichten. Zusammen mit der zu bearbeitenden Oberfläche wird durch den Hohlraum ein erster Vakuumraum ausgebildet. Der erste Vakuumraum dient dazu, die Auffangvorrichtung 500 über einen Unterdruck an der zu bearbeitenden Oberfläche zu befestigen.

Der zweite Ansaugkörper 504 weist eine dritte Dichtung (nicht gezeigt) auf. Die dritte Dichtung dient dazu, einen im Inneren des zweiten Ansaugkörpers 506 ausgebildeten Hohlraum gegenüber der zu bearbeitenden Oberfläche abzudichten. Zusammen mit der zu bearbeitenden Oberfläche wird durch den Hohlraum ein zweiter Vakuumraum ausgebildet. Der zweite Vakuumraum dient dazu, die Auffangvorrichtung 500 über einen Unterdruck an der zu bearbeitenden Oberfläche zu befestigen.

Der erste Ansaugkörper 504 weist einen Vakuumanschluss 522 auf. Der Vakuumanschluss 522 ist in der hier dargestellten Ausführungsform auf einer der ersten Dichtung 512 gegenüberliegenden Seite des ersten Ansaugkörpers 504 angeordnet. Mit anderen Worten, der Vakuumanschluss 522 ist auf der Oberseite des ersten Ansaugkörpers 504 angeordnet.

Der Vakuumraum des ersten Ansaugkörpers 504 ist über einen in Figur 6 angedeuteten Luftkanal 528 mit dem Vakuumraum des zweiten Ansaugkörpers 506 verbunden. Die Vakuumräume der beiden Ansaugkörper 504, 506 sind strömungstechnisch vom Hohlraum des Ansaugkörpers 502 getrennt. Dies wird insbesondere durch die separaten Dichtungen 510, 512, 514 erreicht. Ein Übertritt von Kühlwasser bzw. Bohrschlamm oder Staub aus dem Hohlraum des Absaugkörpers 502 in den Vakuumraum der Ansaugkörper 504, 506 ist somit ausgeschlossen. Die Ansaugkörper 504, 506 dienen ausschließlich zum Halten der Auffangvorrichtung 500 an der zu bearbeitenden Oberfläche. Dagegen dient der Absaugkörper 502 ausschließlich dazu, Bohrschlamm oder Staub, welcher während der Bohrung anfällt, aufzufangen und an eine oben bereits beschriebene Aufbereitungsvorrichtung abzuführen.

Zum Befestigen der Auffangvorrichtung 500 an der zu bearbeitenden Oberfläche (zum Beispiel Wand- bzw. Deckenoberfläche), wird ein Unterdruck innerhalb der Vakuumräume der Ansaugkörper 504, 506 erzeugt. Zur Erzeugung des Unterdrucks wird ein erstes Ende eines Saugschlauchs (nicht dargestellt) an dem Vakuumanschluss 522 des ersten Ansaugkörpers 504 befestigt. Ein gegenüberliegendes, zweites Ende des Saugschlauchs wird mit dem zweiten Sauganschluss 206 der Vakuumpumpe verbunden. Mit Hilfe der Vakuumpumpe 200, kann somit, über den Vakuumanschluss 522, ein Unterdruck im ersten Vakuumraum erzeugt werden. Wie oben bereits erwähnt, ist der erste Vakuumraum über einen Luftkanal mit dem zweiten Vakuumraum des zweiten Ansaugkörpers 506 verbunden. Ein Teil des Luftkanals 528 ist in Figur 6 dargestellt. Ein anderer, nicht dargestellter Teil des Luftkanals wird vorzugsweise zumindest in den Absaugkörper 502 integriert.

Durch den Luftkanal zwischen den Vakuumräumen der beiden Ansaugkörper 504, 506 kann ein Unterdruck in beiden Vakuumräumen mit einem einzigen Sauganschluss 522 erzielt werden. Die Luft in den Vakuumräumen wird also über den Sauganschluss 522 zu der Vakuumpumpe 200 gefördert. Die Vakuumpumpe kann dafür entweder an der Aufbereitungsvorrichtung angeordnet sein (Fig. 4, "zweite Anordnung"). Alternativ kann die Vakuumpumpe 200 auch an einer anderen Auffangvorrichtung (bspw. Auffangvorrichtung 400, Fig. 5, "erste Anordnung").

Zum Absaugen des Bohrschlamms bzw. Staubs aus dem Hohlraum des Absaugkörpers 502 ist wenigstens eine Absaugöffnung 516 im Hohlraum vorgesehen. In der in Figur 6 dargestellten Ausführungsform sind zwei Absaugöffnungen (lediglich zweite Absaugöffnung 516 dargestellt) vorgesehen. Eine erste Absaugöffnung erstreckt sich durch die Innenwand des Hohlraums des Absaugkörpers 502 in Richtung eines ersten Absaugkanals. Die zweite Absaugöffnung 516 erstreckt sich durch die Innenwand des Hohlraums in Richtung eines zweiten Absaugkanals. In der Figur 6 enden die Absaugkanäle in Saugstutzen 518, 250. Ein erster Saugstutzen 518 ist mit einer ersten Absaugöffnung (nicht dargestellt) verbunden. Ein zweiter Saugstutzen 520 ist mit der zweiten Absaugöffnung 516 verbunden.

Die Saugstutzen 518, 520 können dazu verwendet werden, die Rückführleitung 306 der Aufbereitungsvorrichtung 300 anzuschließen. Somit kann über die beiden Saugstutzen 518, 250 Bohrschlamm bzw. Staub aus dem Hohlraum gesaugt und zur Aufbereitungsvorrichtung gefördert werden.

Im Betrieb kann der Benutzer frei wählen, welchen der beiden Saugstutzen 518, 520 er mit der Aufbereitungsvorrichtung verbindet, d. h. auf welchen Saugstutzen 518, 520 der Saugschlauch montiert wird. Der andere Saugstutzen 518, 520 dient dabei als Belüftungsöffnung. Dieser als Belüftungsöffnung verwendete Saugstutzen wird demnach mit einem Einwegventil 534 bzw. 536 verbunden, um ein Herauslaufen von Bohrschlamm aus der Belüftungsöffnung zu verhindern.

Wie oben bereits angedeutet, kann die Vakuumpumpe 200 einerseits selektiv über entweder den ersten Sauganschluss oder den zweiten Sauganschluss Luft absaugen. Andererseits ist es gemäß einer weiteren Ausführungsvarianten auch möglich, dass die Vakuumpumpe gleichzeitig über beide Sauganschlüsse 206, 220 Luft absaugt. Beispielsweise kann die Vakuumpumpe an einer Auffangvorrichtung 400 gemäß Figur 5 angeordnet und gleichzeitig über einen Saugschlauch mit einer zweiten Auffangvorrichtung 500 gemäß Figur 6 verbunden sein. Gemäß dieser Ausführungsvariante kann die Vakuumpumpe 200 einerseits Luft über den ersten Sauganschluss 220 aus dem Vakuumraum 426 der ersten Auffangvorrichtung 400 ziehen. Gleichzeitig kann die Vakuumpumpe 200 Luft über den zweiten Sauganschluss 206 (und den Saugschlauch) aus den Vakuumräumen der zweiten Auffangvorrichtung 500 ziehen. Es ist auch denkbar, dass die Vakuumpumpe 200 derart ausgebildet ist, dass sie abwechselnd aus den Vakuumräumen der ersten und zweiten Auffangvorrichtungen 400, 500 Luft absaugt. Hierzu kann die Vakuumpumpe 200 beispielsweise mit einem weiteren Steuerventil ausgestattet sein, welche ein selektives Absaugen über den ersten bzw. zweiten Sauganschluss 206, 220 ermöglicht.

Die vorliegende Erfindung ist nicht auf die in den Ausführungsformen dargestellten Merkmalskombinationen beschränkt, sondern ergibt sich aus einer Kombination sämtlicher hierin offenbarter Merkmale.

## Patentansprüche

1. Wassermanagementsystem zum Bereitstellen von Kühlwasser und Aufbereiten von Bohrschlamm, der bei Betrieb eines Kernbohrgeräts entsteht, wobei das Wassermanagementsystem folgendes aufweist:
- eine Auffangvorrichtung (400) zum Auffangen von Bohrschlamm oder Staub, der bei Betrieb eines Kernbohrgeräts entsteht, wobei die Auffangvorrichtung einen Absaugkörper (402) mit einer Bohröffnung (404), welche sich durch den Absaugkörper (402) erstreckt und dazu ausgebildet ist eine Bohrkrone aufzunehmen, aufweist;
- eine Aufbereitungsvorrichtung (300) zum Aufbereiten von Bohrschlamm, wobei die Aufbereitungsvorrichtung (300) derart strömungstechnisch mit der Auffangvorrichtung (400) verbindbar ist, dass Bohrschlamm oder Staub, welcher von der Auffangvorrichtung (400) aufgefangen wird, an die Aufbereitungsvorrichtung (300) förderbar ist; und
- eine Vakuumpumpe (200), welche mit der Auffangrichtung strömungstechnisch verbindbar ist,
wobei das Wassermanagementsystem derart ausgebildet ist, dass die Vakuumpumpe (200) wahlweise, in einer ersten Anordnung, an der Auffangvorrichtung (400) oder, in einer zweiten Anordnung, an der Aufbereitungsvorrichtung (300) lösbar befestigt werden kann.

2. Wassermanagementsystem nach Anspruch 1,
wobei Vakuumpumpe (200) in der ersten Anordnung und in der zweiten Anordnung strömungstechnisch mit der Auffangvorrichtung (400, 500) verbindbar ist.

3. Wassermanagementsystem nach Anspruch 1 oder 2,
wobei die Vakuumpumpe (200) einen ersten Sauganschluss (220) aufweist, welcher in der ersten Anordnung der Vakuumpumpe (200) strömungstechnisch mit der Auffangvorrichtung (400) verbunden ist, und wobei die Vakuumpumpe (200) einen zweiten Sauganschluss (206) aufweist, welcher in der zweiten Anordnung der Vakuumpumpe (200) strömungstechnisch mit der Auffangvorrichtung (400) verbunden ist.

4. Wassermanagementsystem nach Anspruch 3,
wobei die Vakuumpumpe (200) ein erstes Ventil (222) aufweist, welches zwischen einer geschlossenen und einer geöffneten Stellung überführbar ist, und wobei das erste Ventil (222) derart ausgebildet ist, dass das erste Ventil, bei Befestigung der Vakuumpumpe (200) an der Auffangvorrichtung (400), vom geschlossenen Zustand in den geöffneten Zustand überführt wird.

5. Wassermanagementsystem nach Anspruch 3 oder 4,
wobei der zweite Sauganschluss (206) als Saugstutzen (230) ausgebildet ist, und wobei der zweite Sauganschluss (206) über einen Saugschlauch mit einem Sauganschluss der Auffangvorrichtung (400) verbindbar ist.

6. Wassermanagementsystem nach Anspruch 5,
wobei die Vakuumpumpe (200) ein zweites Ventil (234) aufweist, welches zwischen einer geschlossenen und einer geöffneten Stellung überführbar ist, und wobei das zweite Ventil (234) derart ausgebildet ist, dass das zweite Ventil, bei Befestigung eines Saugschlauchs am zweiten Sauganschluss (206), vom geschlossenen Zustand in den geöffneten Zustand überführt wird.

7. Wassermanagementsystem nach einem der Ansprüche 1 bis 6,
wobei die Vakuumpumpe (200) ein Batterieterminal (214) zur lösbaren Befestigung einer Batterie aufweist.

8. Wassermanagementsystem nach Anspruch 7,
wobei das Batterieterminal (214) derart ausgebildet ist, dass eine Batterie in der ersten und der zweiten Anordnung lösbar am Batterieterminal (214) befestigbar ist.

9. Wassermanagementsystem nach Anspruch 7 oder 8,
wobei die Aufbereitungsvorrichtung (300) ein Anschlussterminal aufweist, welches dazu ausgebildet ist, die Vakuumpumpe (200), in der zweiten Anordnung, elektrisch mit der Aufbereitungsvorrichtung (300) zu verbinden.

10. Vakuumpumpe (200) zum Erzeugen eines Unterdrucks für Auffangvorrichtung (400)en zum Auffangen von Bohrschlamm oder Staub, der bei Betrieb eines Kernbohrgeräts anfällt, wobei die Vakuumpumpe (200) Befestigungsmittel (208, 210) aufweist, welche dazu ausgebildet sind die Vakuumpumpe (200) wahlweise, in einer ersten Anordnung, an einer Auffangvorrichtung (400) oder, in einer zweiten Anordnung, an einer Aufbereitungsvorrichtung (300) lösbar zu befestigen.

11. Vakuumpumpe (200) nach Anspruch 10,
wobei die Vakuumpumpe (200) einen ersten Sauganschluss (220) aufweist, welcher, in der ersten Anordnung der Vakuumpumpe (200), strömungstechnisch mit einer Auffangvorrichtung (400) verbindbar ist.

12. Vakuumpumpe (200) nach Anspruch 10 oder 11,
wobei die Vakuumpumpe (200) einen zweiten Sauganschluss (206) aufweist, welcher derart als Saugstutzen (230) ausgebildet ist, dass ein Saugschlauch strömungstechnisch mit dem zweiten Sauganschluss (206) verbindbar ist.

13. Vakuumpumpe (200) nach Anspruch 12,
wobei der erste Sauganschluss (220) an einer ersten Außenoberfläche (202) der Vakuumpumpe (200) angeordnet ist, wobei der zweite Sauganschluss (206) an einer zweiten Außenoberfläche (204) der Vakuumpumpe (200) angeordnet ist, wobei die erste Außenoberfläche (202) vorzugsweise im Wesentlichen senkrecht zur zweiten Außenoberfläche (204) ist.

14. Vakuumpumpe (200) nach Anspruch 12 oder 13,
wobei die Vakuumpumpe (200) folgendes aufweist:
- ein erstes Ventil (222), welches zwischen einer geschlossenen Stellung, in welcher der erste Sauganschluss (220) verschlossen ist, und einer geöffneten Stellung, in welcher der erste Sauganschluss (220) geöffnet ist, überführbar ist;
- ein zweites Ventil (234), welches zwischen einer geschlossenen Stellung, in welcher der zweite Sauganschluss (206) verschlossen ist, und einer geöffneten Stellung, in welcher der zweite Sauganschluss (206) geöffnet ist, überführbar ist.

15. Aufbereitungsvorrichtung (300) zum Aufbereiten von Bohrschlamm, der bei Betrieb eines Kernbohrgeräts entsteht, wobei die Aufbereitungsvorrichtung (300) eine Schnittstelle zum lösbaren Befestigen einer Vakuumpumpe (200) aufweist.
